Europäisches Patentamt

European Patent Office

Office européen des brevets

(19)

(11) Veröffentlichungsnummer : **0 107 124 B1**

(12) **EUROPÄISCHE PATENTSCHRIFT**

(45) Veröffentlichungstag der Patentschrift :
02.01.86

(51) Int. Cl.⁴ : **C 07 C 87/14, C 07 C 85/06// B01J23/70**

(21) Anmeldenummer : **83109955.1**

(22) Anmeldetag : **05.10.83**

(54) **Verfahren zur Herstellung von 1,3-Diamino-2,2-dialkylpropanen.**

(30) Priorität : **21.10.82 DE 3238931**

(43) Veröffentlichungstag der Anmeldung :
**02.05.84 Patentblatt 84/18**

(45) Bekanntmachung des Hinweises auf die Patenterteilung : **02.01.86 Patentblatt 86/01**

(84) Benannte Vertragsstaaten :
**AT BE CH DE FR GB LI NL**

(56) Entgegenhaltungen :
**DE-A- 1 543 377**
**DE-A- 1 953 263**
**DE-A- 2 358 355**
**DE-B- 2 722 957**
**FR-A- 1 347 648**
**US-A- 2 418 237**

(73) Patentinhaber : **BASF Aktiengesellschaft**
**Carl-Bosch-Strasse 38**
**D-6700 Ludwigshafen (DE)**

(72) Erfinder : **Merger, Franz, Dr.**
**Max-Slevogt-Strasse 25**
**D-6710 Frankenthal (DE)**
Erfinder : **Voges, Dieter, Dr.**
**Richard-Wagner-Strasse 28**
**D-6800 Mannheim 1 (DE)**
Erfinder : **Winderl, Siegfried, Dr.**
**3-14-26 hiroo Shibuya-ku**
**Tokyo 150 (JP)**

EP 0 107 124 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die vorliegende Erfindung betrifft ein neues Verfahren zur Herstellung von 1,3-Diamino-2,2-dialkyl-propanen ausgehend von den entsprechenden Diolen.

Nach dem Vorschlag der DE-AS 11 72 268, DE-OS 19 53 263 und US-PS 3 137 730 können einfache Diamine (z. B. Ethylendiamin und seine Homologen) aus den entsprechenden Glykolen und Ammoniak bzw. primären und sekundären Aminen mittels eines Kobalt, Nickel und Kupfer enthaltenden Katalysators unter aminolytischen Bedingungen erhalten werden.

Aus der DE-OS 23 58 355 geht hervor, daß der Mechanismus der Aminolyse von α,ω-Diolen — und damit auch die Entstehung von Nebenprodukten in Qualität und Quantität — von der Struktur dieser Diole entscheidend mitbeeinflußt wird.

Auf dem Gebiet der sterisch gehinderten und bisher wenig bearbeiteten 1,3-Diamino-2,2-dialkylpro-pane zeigt sich diese Problemstellung besonders deutlich.

1,3-Diamino-2,2-dimethylpropan, der bekannteste Vertreter dieser Klasse, konnte lange Zeit nur sehr umständlich über C-C-Knüpfungsreaktionen etc. hergestellt werden (J. Am. Chem. Soc. *71*, 3249 (1949)). Seine Synthese über eine Druckammonolyse, ausgehend von 2,2-Dimethylpropandiol-1,3, in Gegenwart von Nickelkatalysatoren wurde erstmals in der DE-OS 23 58 355 beschrieben. Bei dieser Synthese entstand aber gleichzeitig eine breite Palette an Nebenprodukten (Formaldehyd, Isobutyraldehyd und daraus dann durch reduktive Aminierung Methyl- und Isobutylamin), die die Ausbeute des gewünschten Produktes auf 78 % der Theorie begrenzten.

Zudem zeigt sich, daß ein weiteres, allerdings dort (loc. cit.) nicht erwähntes Nebenprodukt (N-Methyl-1,3-diamino-2,2-dimethylpropan) nur sehr schwer vom Hauptprodukt abzutrennen ist.

Neben der Struktur des Ausgangsproduktes ist vermutlich aber auch die Natur des eingesetzten Katalysators von entscheidender Bedeutung für diese Produktverteilung. Ziel der vorliegenden Erfindung war es nun, ein Verfahren zur Herstellung der sterisch gehinderten 1,3-Diamino-2,2-dialkylpropane bereitzustellen, das die gewünschten Produkte in guter Ausbeute und Reinheit liefert.

Es wurde gefunden, daß man 1,3-Diamino-2,2-dialkylpropane, deren Alkylsubstituenten jeweils 1 bis 4 Kohlenstoffatome aufweisen, durch Umsetzung der entsprechenden 2,2-Dialkylpropandiole-1,3 mit Ammoniak in Gegenwart von Wasserstoff und eines Katalysators bei erhöhtem Druck vorteilhaft erhält, wenn man die Reaktion in Lösung durchführt und kobalthaltige Katalysatoren verwendet.

Mit dem neuen Verfahren, das sowohl kontinuierlich als auch diskontinuierlich durchgeführt werden kann, läßt sich die Bildung von Nebenprodukten stark einschränken.

Als 2,2-dialkylsubstituierte 1,3-Propandiole kommen beispielsweise Neopentylglykol (2,2-Dimethylpropandiol-1,3), 2-Methyl-2-ethylpropandiol-1,3 2,2-Diethylpropandiol-1,3, 2-Methyl-2-i-propylpropandiol-1,3 oder 2-Ethyl-2-butylpropandiol-1,3 in Betracht.

Die Umsetzung der Diole mit Ammoniak in Gegenwart von Wasserstoff erfolgt in Lösung. Man verwendet solche Lösungsmittel, die unter den gegebenen Reaktionsbedingungen inert sind. Das sind z. B. die Stoffklassen der aromatischen Kohlenwasserstoffe (wie Toluol, Xylol) oder der Ether. Zweckmäßig setzt man dabei die Stoffklasse der Ether ein, beispielsweise Tetrahydrofuran, Dioxan oder auch Ethylenglykoldimethylether.

In manchen Fällen ist es von Vorteil, die Umsetzung mit Wasser als Lösungsmittel durchzuführen. So arbeitet man in Falle von Neopentylglykol vorzugsweise in wäßriger Lösung.

Die zur Umsetzung benötigten kobalthaltigen Katalysatoren enthalten 18 bis 25 gew.% Kobaltoxid, 0 bis 1,5 Gew.% Chrom- oder Manganoxid und 0,1 bis 0,3 Gew.% Natriumoxid, jeweils bezogen auf das Gesamtgewicht des Katalysators.

Zusätzlich können bei den Katalysatoren im nichtreduzierten Zustand bis zu 60 Gew.% des Kobaltoxids durch Nickel- und Kupferoxid ersetzt sein. Dabei sollen Nickel- und Kupferoxid in einem Gewichtsverhältnis von 2 : 1 bis 3 : 1 zueinander stehen.

Die Katalysatoren liegen üblicherweise als Trägerkatalysatoren vor. Trägermaterialien sind an sich bekannte Stoffe, wie Aluminium- oder Siliciumoxid.

Das erfindungsgemäße Verfahren soll aber auch die Verwendung von trägerfreien Katalysatoren mit einschließen, wobei die Angaben in Gew.%, die sich auf Trägerkatalysatoren beziehen, entsprechend anzuwenden sind.

Die Herstellung der Katalysatoren erfolgt nach an sich bekannten Methoden, wie sie beispielsweise in « Ullmanns Encyklopädie der technischen Chemie », 4. Auflage, Band 13, Seite 558 ff und der dort zitierten Folgeliteratur beschrieben sind.

Die Reaktionsbedingungen können über einen weiten Bereich hinweg variiert werden. Bei kontinuierlicher Arbeitsweise erweist sich eine Reaktionstemperatur von 160 bis 240 °C, vorzugsweise 170 bis 220 °C, als besonders vorteilhaft. Man arbeitet bei einem Druck im Bereich von 150 bis 300 bar, wobei der Partialdruck des Ammoniaks ca. 115 bar beträgt. Der Wasserstoffpartialdruck liegt bei 35 bis 125 bar.

Die folgenden Beispiele sollen das Erfindungsgemäße Verfahren näher veranschaulichen :

### Beispiel 1

Dieses Beispiel beschreibt Vergleichsversuche, die vorgenommen wurden, um eine Auswahl der zu prüfenden Katalysatoren zu treffen.

2

Folgende Katalysatoren wurden eingesetzt :

Bestandteil im nichtreduzierten Zustand [Gew.%]

|  | CoO | NiO | $Mn_3O_4$ | CuO | $Cr_2O_3$ | $Na_2O$ | Träger-material |
|---|---|---|---|---|---|---|---|
| Katalysator 1 | 23,1 | – | 1,1 | – | – | 0,1 | 75,7 ($Al_2O_3$) |
| Katalysator 2 | 9,8 | 9,5 | – | 4,0 | – | – | 76,7 ($Al_2O_3$) |
| Vergleichs-katalysator 3 | – | 21,3 | 2,1 | 7,6 | – | 0,4 | 68,6 ($SiO_2$) |
| Vergleichs-katalysator 4 | – | 62,4 | – | – | – | – | 37,6 ($Al_2O_3$) |
| Vergleichs-katalysator 5 | – | 61,4 | – | – | 14,5 | – | 24,1 ($SiO_2$) |
| Vergleichs-katalysator 6 | – | 61,4 | – | – | 14,5 | – | 24,1 ($Al_2O_3$) |

In einen Reaktor von 3,5 m Länge und einem freien Querschnitt von 14 cm² wurden jeweils 3,5 l Katalysatorstränge der angeführten Zusammensetzung eingefüllt.

Die Katalysatoren wurden auf 300 °C (Katalysator 1 und 2) bzw. 450 °C (Vergleichskatalysator 3 bis 6) erhitzt und 48 h im Wasserstoffstrom reduziert. Nach dem Abkühlen auf 30 °C wurde mit flüssigem Ammoniak getränkt.

Reaktionsbedingungen :

a) Zulauf :

300 ml/h wäßrige Lösung von 2,2-Dimethylpropandiol-1,3 (70 Gew.%)

1 000 ml/h Ammoniak (flüssig)

b) Temperatur :

in Abhängigkeit vom Umsatz und von der Ausbeute an NPDA. Es wurde jeweils die Temperatur gewählt, bei der die besten Resulte erzielt wurden (s. u.).

c) Druck :

250 bar (Wasserstoff)

d) Abgas : 300 Nl/h.

Vergleichsergebnisse :

| | | | | GC-Analyse (wasserfrei) [Gew.%] | | | | | | |
|---|---|---|---|---|---|---|---|---|---|---|
| Reaktions-temperatur °C | Um-satz [%] | Aus-beute [%] | Vor-lauf | NPDA* | N-Methyl-* NPDA | NPOLA* | Sonst. | NPG* | Nachlauf und Rückstand |
| Katalysator 1 | 220 | 99,6 | 63,9 | 12,2 | 63,7 | 0,4 | 10,4 | 4,0 | 0,4 | 8,9 |
| Katalysator 2 | 200 | 96,5 | 70,6 | 4,0 | 68,1 | 3,1 | 19,9 | 0,7 | 3,5 | 0,7 |
| Vergleichs-katalysator 3 | 240 | 91,0 | 57,9 | 25,3 | 52,7 | 4,5 | 5,5 | 2,4 | 9,0 | 0,6 |
| Vergleichs-katalysator 4 | 240 | 86,8 | 38,5 | 21,8 | 33,4 | 19,8 | 2,2 | 4,5 | 13,2 | 5,1 |
| Vergleichs-katalysator 5 | 210 | 75,8 | 42,6 | 16,6 | 32,3 | 3,8 | 11,6 | 3,1 | 24,2 | 9,3 |
| Vergleichs-katalysator 6 | 210 | 67,5 | 40,9 | 11,3 | 27,6 | 3,3 | 11,6 | 7,5 | 32,5 | 6,2 |

Die Ausbeute bezieht sich jeweils auf umgesetztes 2,2-Dimethylpropan-diol-1,3

* NPDA = Neopentandiamin = 1,3-Diamino-2,2-dimethylpropan

N-Methyl-NPDA = N-Methyl-1,3-diamino-2,2-dimethylpropan

NPOLA = Neopentanolamin = 1-Amino-2,2-dimethylpropanol-3

NPG = Neopentylglykol = 2,2-Dimethylpropandiol-1,3

Während man mit den erfindungsgemäßen Katalysatoren 1 und 2 bei Umsätzen > 96 % Ausbeuten zwischen 60 und 70 % erzielt, fand man bei den Vergleichskatalysatoren 3 bis 6 (bei Temperaturen von bis zu 240 °C !) Umsätze zwischen 67 und 91 % und Ausbeutewerte von lediglich 38 bzw. 58 %.

Beispiel 2

In einen Hochdruckreaktor von 8 m Länge wurden 200 l Katalysator 2 (siehe Beispiel 1) eingefüllt und reduziert. Bei einer Temperatur von 195 bis 200 °C, einem Druck von 250 bar (Wasserstoff) und einer Kreisgasmenge von 50 Nm³/h wurden in den Reaktor stündlich 20 kg einer wäßrigen 2,2-Dimethyl-propandiol-1,3-Lösung (70 Gew.%) und 125 kg Ammoniak (flüssig) geleitet. Der Reaktoraustrag wurde täglich analysiert und enthielt (wasserfrei gerechnet) :

| Vorlauf | 0,2- 0,3 % |
|---|---|
| N-Methyl NPDA[*] | 2,3- 2,5 % |
| NPDA | 87,6-87,0 % |
| NPOLA | 3,0- 4,0 % |
| NPG | 0,2- 0,1 % |
| Nachlauf | 5,2- 5,4 % |
| Rückstand | 1,5- 0,7 % |

[*] Symbole siehe Beispiel 1.

Bei nahezu quantitativem Umsatz lag die Ausbeute bei 87 bis 88 %.

Beispiel 3

In einen l 1-Reaktor von 1,7 m Länge und einem freien Querschnitt von 5,3 cm² wurden über ein Kontaktvolumen von 0,5 l, bestehend aus dem reduzierten Katalysator 1 (siehe Beispiel 1), 90 g/h einer Lösung von 50 Gew.% von 2-Methyl-2-propylpropandiol-1,3 in Tetrahydrofuran sowie 360 g Ammoniak (flüssig) geleitet. Die Reaktionstemperatur wurde bei 190 °C und der Druck bei 250 bar (Wasserstoff) gehalten. Die Abgasmenge betrug 100 Nl/h.

Der Reaktoraustrag enthielt bei 77 %igem Umsatz des Ausgangsproduktes (wasserfrei gerechnet) 41 Gew.% an 1,3-Diamino-2-methyl-2-propylpropan. Die Ausbeute betrug demnach 53 %.

Beispiel 4

Analog Beispiel 3 wurde 2-Methyl-2-ethylpropandiol-1,3 umgesetzt.

Der Reaktoraustrag enthielt bei 75 %igem Umsatz des Ausgangsproduktes (wasserfrei gerechnet) 46 Gew.% an 1,3-Diamino-2-methyl-2-ethylpropan. Die Ausbeute betrug demnach 61 %.

**Patentansprüche**

1. Verfahren zur Herstellung von 1,3-Diamino-2,2-dialkylpropanen, deren Alkylsubstituenten jeweils 1 bis 4 Kohlenstoffatome aufweisen, durch Umsetzung der entsprechenden 2,2-Dialkylpropandiole-1,3 mit Ammoniak in Gegenwart von Wasserstoff und eines Katalysators bei erhöhtem Druck, dadurch gekennzeichnet, daß man die Reaktion in Lösung durchführt und kobalthaltige Katalysatoren verwendet.

2. Verfahren nach Anspruch 1, dadurch gekennzeichnet, daß die kobalthaltigen Katalysatoren im nichtreduzierten Zustand 18 bis 25 Gew.% Kobaltoxid, 0 bis 1,5 Gew.% Chrom- oder Manganoxid und 0,1 bis 0,3 Gew.% Natriumoxid, jeweils bezogen auf das Gesamtgewicht der Katalysatoren, enthalten.

3. Verfahren nach Anspruch 1, dadurch gekennzeichnet, daß bei den kobalthaltigen Katalysatoren im nichtreduzierten Zustand bis zu 60 Gew.% des Kobaltoxids durch Nickel- und Kupferoxid ersetzt werden, wobei Nickel- und Kupferoxid in einem Gewichtsverhältnis von 2 : 1 bis 3 : 1 zueinander stehen sollen.

4. Verfahren nach Anspruch 1, dadurch gekennzeichnet, daß man die Umsetzung bei einer Temperatur von 170 bis 220 °C durchführt.

**Claims**

1. A process for the preparation of a 1,3-diamino-2,2-dialkylpropane whose alkyl substituents are each of 1 to 4 carbons atoms, by reacting the corresponding 2,2-dialkylpropane-1,3-diol with ammonia in the presence of hydrogen and a catalyst under superatomspheric pressure, wherein the reaction is carried out in solution, and a cobalt-containing catalyst is employed.

2. A process as claimed in claim 1, wherein the cobalt-containing catalyst in the unreduced state contains from 18 to 25 % by weight of cobalt oxide, from 0 to 1.5 % by weight of chromium oxide or manganese oxide and from 0.1 to 0.3 % by weight of sodium oxide, the percentages in each case being based on the total weight of the catalyst.

3. A process as claimed in claim 1, wherein, in the cobalt-containing catalyst in the unreduced state, up to 60 % by weight of the cobalt oxide is replaced by nickel oxide and copper oxide, the weight ratio of nickel oxide to copper oxide being from 2 : 1 to 3 : 1.

4. A process as claimed in claim 1, wherein the reaction is carried out at from 170 to 220 °C.

**Revendications**

1. Procédé de préparation de diamino-1,3 dialcoyl-2,2 propanes, dont les substituants alcoyle possèdent 1 à 4 atomes de carbone, par réaction des dialcoyl-2,2 propane-diols-1,3 correspondants sous pression accrue et en présence d'un catalyseur avec l'ammoniac et de l'hydrogène, caractérisé en ce que la réaction est réalisée en solution en présence d'un catalyseur au cobalt.

2. Procédé suivant la revendication 1, caractérisé en ce que le catalyseur au cobalt contient, à l'état non réduit, entre 18 et 25 % d'oxyde de cobalt, entre 0 et 1,5 % d'oxyde de chrome ou de manganèse et entre 0,1 et 0,3 % d'oxyde de sodium, ces pourcentages se rapportant au poids total du catalyseur.

3. Procédé suivant la revendication 1, caractérisé en ce que, dans le catalyseur au cobalt à l'état non réduit, jusqu'à 60 % en poids de l'oxyde de cobalt sont remplacés par de l'oxyde de nickel et de l'oxyde de cuivre, le rapport pondéral entre l'oxyde de nickel et l'oxyde de cuivre étant compris entre 2 : 1 et 3 : 1.

4. Procédé suivant la revendication 1, caractérisé en ce que la réaction est effectuée à une température comprise entre 170 et 220 °C.